# EUROPEAN PATENT APPLICATION

(11) **EP 4 742 127 A1**
(43) Date of publication of application: **13.05.2026**
(21) Application number: 25207154.3
(22) Date of filing: 07.10.2025
(51) Int. Cl.: G06Q 10/083

(54) **AUTOMATED DISTRIBUTION SYSTEM FOR BUILDINGS AND OPERATING METHOD**

(30) Priority: 12.11.2024 IT 202400025476
(71) Applicant: Magistra S.r.l., 20142 Milano (MI) (IT)
(72) Inventor: FRIGERIO, Cesare, 20142 MILANO (IT); FATTORI, Francesco, 20142 MILANO (IT)
(74) Representative: Tiburzi, Andrea

(57) **Abstract**

The present invention relates to a dynamic parcel conservation and distribution system (1) for buildings (E), comprising a distribution assembly (2), comprising a supporting frame (21), intended to be installed on a building (E), one or more boxes (22), each one having a selectively openable door (23), and moving means (24) for moving said box (22) along said supporting frame (21); and control means (3), comprising a central control unit (31), and a peripheral unit (32) operatively connected to said central control unit (31) and to said moving means (24), for moving said boxes (22) to correspond to positions in said building (E) for loading and unloading of said box (22);

The present invention also relates to an operating method of the storage and distribution system (1).

## Description

The present invention relates to an automated distribution system for buildings and operating method.

### Field of invention

More specifically, the invention concerns a system and method for the distribution and storage of goods and parcels, designed and realized in particular for ordering, transmitting, and storing packages and goods in buildings, but which can be used for any case in which it is necessary to place orders and manage them in specific buildings.

The following description will focus on the management of parcel distribution and storage of goods in buildings, but it is clear that it should not be considered limited to this specific use.

### Prior art

In recent years, the e-commerce industry has seen significant growth, leading to increased demand for efficient parcel delivery systems.

Traditional delivery methods often face challenges when recipients are not available to receive parcels at their homes or offices.

These circumstances have created the need for innovative delivery management solutions, especially in densely populated urban areas.

Automated delivery systems for buildings have emerged as a potential solution to these challenges. These systems can offer several benefits, including greater convenience for recipients, fewer failed delivery attempts, and increased parcel security.

Additionally, they can help reduce traffic and emissions associated with repeated deliveries. Integrating these systems into existing and new buildings may require architectural and logistical considerations.

At the same time, the reduction in square footage of newly constructed apartments has created a growing need for additional, secure, and easily accessible storage solutions within the buildings themselves. Aspects such as accessibility, storage capacity, and user interface are important factors in the design of these systems. Furthermore, evolving technologies such as the Internet of Things (IoT) and artificial intelligence can offer new opportunities to improve the efficiency and functionality of these automated delivery systems. As cities become increasingly smarter and more connected, automated delivery systems for buildings can play a significant role in improving urban logistics and the quality of life of residents. Continued research and development in this field can lead to even more advanced and efficient solutions to address the challenges of parcel delivery in the modern urban context.

### Purpose of the invention

In light of the above, it is therefore the purpose of the present invention to provide an automated distribution system for buildings of any type, residential, commercial (e.g., large-scale retail trade, etc.), that optimizes storage space and improves delivery efficiency.

Another aim of the invention is to offer a flexible and customizable solution that can adapt to different building configurations and user needs.

The present invention also aims to increase the security and traceability of parcels, reducing the risk of theft or damage.

A further aim of the present invention is to improve the accessibility of parcels for users, allowing collection at any time without the need to be present during delivery.

It is also the purpose of this invention to store users' goods, increasing safety, allowing collection and storage at any time, like a personal warehouse.

Another aim of the invention is to reduce traffic and emissions associated with repeated deliveries, thus contributing to environmental sustainability.

### Object of the invention

It is specific object of the present invention a dynamic parcel conservation and distribution system for buildings, comprising: a distribution assembly, comprising a supporting frame, intended to be installed on a building, one or more boxes, each one having a selectively openable door, and moving means for moving said box along said supporting frame; and control means, comprising a central control unit, and a peripheral unit operatively connected to said central control unit and to said moving means, for moving said boxes to correspond to positions in said building for loading and unloading of said box; wherein said central control unit is configured to control said peripheral unit such that: said peripheral unit actuates said moving means to position said box at a loading position of said box; said peripheral unit actuates the opening of said door for the insertion of at least one item into said box; said peripheral unit actuates said moving means to position said box at an unloading position in said building; and said peripheral unit actuates the opening of said door for the removal of the contents.

Always according to the invention, said supporting frame may comprise aluminum elements that are interlockable to form a framework.

Still according to the invention, said central control unit may comprise a programmable microprocessor, and storage means for storing a program executed by said microprocessor.

Advantageously according to the invention, said central control unit may comprise retransmission means, preferably of cellular and/or Wi-Fi type, and said system may comprise a plurality of mobile devices, such as mobile phones, smartphones, tablets, laptops, and the like, programmed to connect with said retransmission means of said central control unit, wherein said central control unit is configured to receive from one of said mobile devices a coded signal for controlling the loading and unloading positions of said box and the opening of said door at said loading and unloading positions.

Further according to the invention, said distribution assembly may comprise a column, and an elevator, movable in sliding motion on said column along a sliding direction, wherein said box is arranged on said elevator.

Always according to the invention, said supporting frame may comprise one or more vertically arranged and adjacent lanes, and one or more drawers, arranged in said lanes, wherein said elevator is capable of positioning said box on one of said drawers.

Still according to the invention, said elevator may comprise: a loading-unloading tray; a first sliding guide, on which said loading-unloading tray is arranged, wherein said loading-unloading tray is movable in a direction for positioning said box in one of said drawers, and a second sliding guide for the movement on which said loading-unloading tray is arranged, wherein said loading-unloading tray is movable in a direction for positioning said box corresponding to one of said lanes.

Advantageously according to the invention, said drawers may be positioned corresponding to openings or mouths of said building.

It is further object of the present invention a method for the automated management of a dynamic conservation and distribution system for buildings of parcels according to any one of the preceding claims, comprising the steps of: receiving an activation command from a mobile device via said central control unit; activating said moving means form moving a box in response to the received command, to move said box towards a predetermined loading or unloading position; and selectively opening the door of the box to allow the insertion or extraction of a parcel.

Always according to the invention, said activation step may comprise the sub-step of positioning the box in a drawer and/or aligning it with an opening of the building.

Still according to the invention, said activation step may comprise the sub-step of: selecting a box of appropriate dimensions based on information about the size of the parcel received.

Advantageously according to the invention, said request or activation signal may comprise information about the size of the parcel to be managed.

Further according to the invention, said method may comprise the step of recording the operation performed in a historical archive.

Always according to the invention, said method may comprise the step of notifying the user, via the mobile device, of the status of the loading or unloading operation.

Still according to the invention, the activation step may comprise the following sub-steps: moving said elevator in a vertical direction; and moving a loading-unloading tray along a first sliding guide in direction and a second sliding guide in direction, perpendicular to said first sliding guide in direction.

Further according to the invention, said method may further comprise the steps of: optimizing the storage position of the parcel within the system based on an algorithm that considers the frequency of access and the sizes of the parcels.

Advantageously according to the invention, said optimization of the storage position may be performed during periods of low activity of the system.

### Brief description of the figures

The present invention will be now described, for illustrative but not limitative purposes, according to its preferred embodiments, with particular reference to the figures of the enclosed drawings, wherein:
figure 1 shows a perspective view of a building distribution system, according to aspects of the present invention;
figure 2 shows a first side view according to figure 1 of the distribution system applied to a building;
figure 3 shows a second side view according to figure 1 of the distribution system applied to a building;
figure 4 illustrates a block diagram of a control system for the parcel distribution system, according to figure 1;
figure 5 shows a flowchart of a method for managing an automated storage and distribution system, according to one embodiment; and
figure 6 shows a flowchart detailing one step of the method in fgigure 5.

### Detailed description

In the various figures, similar parts will be indicated with the same numerical references.

The present invention relates to a dynamic storage and distribution system for parcels within buildings. The system may comprise a distribution unit, which comprises a support frame designed to be installed on a building, one or more boxes, each with a selectively opening door, and handling means for moving the box on the support frame.

The system may also comprise control devices, including a central control unit and a peripheral unit operationally connected to the central control unit and the handling devices, for moving the boxes to locations within the building for loading and unloading. In some cases, the central control unit may be configured to control the peripheral unit so that the peripheral unit activates the handling devices to position the box for loading or unloading and opens the door to insert or remove a parcel. In some cases, the system may be designed to interact directly with the building's architecture, facilitating loading and unloading operations from inside or outside the building itself. This modular and technological approach offers a versatile distribution system, suitable for various building types and configurations, with the ability to be efficiently and remotely controlled via mobile devices.

The system can be implemented through integration within the technical space of multi-story buildings, an often unused area but useful for logistics. The technical space, generally located next to the elevators and intended to house systems such as electrical and plumbing, represents an optimal location for the installation of locker safe and easily accessible to residents.

The system, as will be further described below, comprises a series of stacked vertical compartments designed to provide temporary storage for parcels and personal belongings. The compartments, which house movable boxes, are available in various sizes, allowing for a variety of items, from small parcels to bulky supplies. Each floor of the building is equipped with a smart control panel, allowing residents to independently and safely manage the pickup or drop-off of their parcels. The system, as further described below, is accessible via a dedicated mobile app device or through a user interface on the panel, making it unnecessary to coordinate deliveries with the recipient's physical presence.

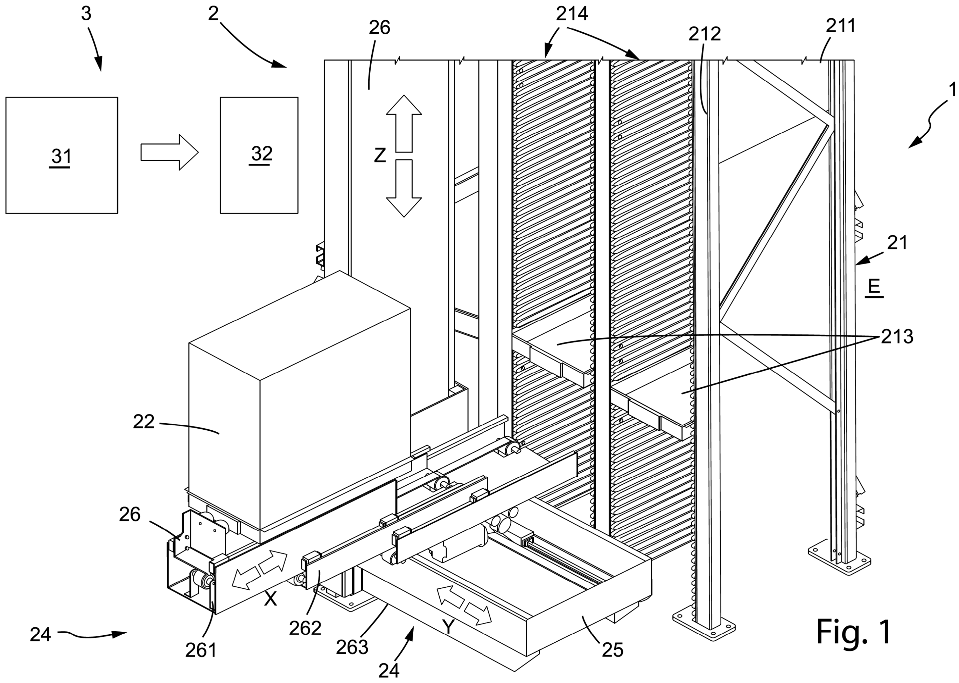

Referring to figure 1, a distribution system 1, comprising a distribution assembly 2 and control means 3, can be seen.

The distribution assembly 2 comprises a support frame 21 designed to be installed on a building E. The support frame 21 can be made with aluminum elements 211, 212, which allow for modular and flexible assembly of the system within the building. Using said aluminum elements 211, 212, the support frame can be made using lattice structures.

The distribution assembly 2 also comprises one or more boxes 22, for containing parcels and elements, each equipped with a door 23 that can be opened selectively on command.

The boxes 22 can be moved along the support frame 21 by means of moving means 24. These moving means 24 allow the boxes 22 to be positioned in various positions within the building E, facilitating the loading and unloading operations of the parcels contained in the boxes 22.

The control means 3 of the distribution system 1 comprise a central control unit 31 and a peripheral unit 32.

The peripheral unit 32 is operationally connected to the central control unit 31 and to the moving means 24. This configuration allows the peripheral unit 32 to execute the commands received from the central control unit 31, which include managing the movement of the box 22 towards the loading and unloading positions and opening the door 23, to allow the transfer of the parcels.

This process occurs in a coordinated manner, ensuring automation in transport operations.

Referring to figure 1, it is observed that the elevator 25 is movable along a column 26 in a vertical sliding direction, indicated by Z. This configuration allows the elevator 25 to move vertically along the column 26 and therefore reach the different floors of the building E, allowing the box 22 to be positioned at different heights within the support frame 21.

In some embodiments, the box 22 may be arranged on the elevator 25, allowing the box 22 to be moved vertically within the support frame 21.

The support frame 21 may comprise one or more lanes 214 arranged vertically and side by side, as shown in the figures. Said lanes 214 may be designed to accommodate one or more boxes 22, allowing the boxes 22 to be arranged within the support frame 21 at different heights.

Furthermore, the support frame 21 may comprise one or more drawers 213, arranged in the lanes 214, always at different heights, preferably corresponding to the floors of the building E. The drawers 213 act as housings for the box 22 once the desired position has been reached. In particular, the elevator 25 is designed to place the box 22 in one of the drawers 213.

The central control unit 31 is configured to control the peripheral unit 32. By this control, the peripheral unit 32 can operate the moving means 24 to place the box 22 in a loading or unloading position. Furthermore, the peripheral unit 32 can operate the opening of the door 23 to allow the insertion or extraction of a parcel or an object to be delivered. These operations can be performed in a coordinated manner, ensuring precision and automation in transport operations.

In one embodiment, the elevator 25 comprises a loading-unloading tray 261, which can be moved along a first sliding guide 262 in a first direction X, perpendicular to the vertical sliding direction, indicated by Z, and a second sliding guide 263, oriented in a second direction Y, perpendicular to the first sliding guide 262, and therefore to the first direction X.

This configuration allows the tray 261 to precisely position the box 22 within the support frame 21, in both the vertical and horizontal directions.

Referring to figure 1, the elevator 25, by means of the first sliding guide 262 and the second sliding guide 263, is able to position the box 22 on one of the drawers 213. This allows each box 22 to be positioned at different heights inside the support frame 21, facilitating the loading and unloading operations of the parcels.

The support frame 21 can be constructed using aluminum elements 211, 212. These aluminum elements 211, 212 can be interlockingly assembled to create a framework. This modular structure allows for flexible installation of the system within the building E, e.g., in a dedicated compartment, or outside the building E, allowing for customization based on the specific needs of the building.

In some cases, the support frame 21 may be designed to accommodate a plurality of boxes 22, allowing for the flexible arrangement of the boxes 22 within the support frame 21.

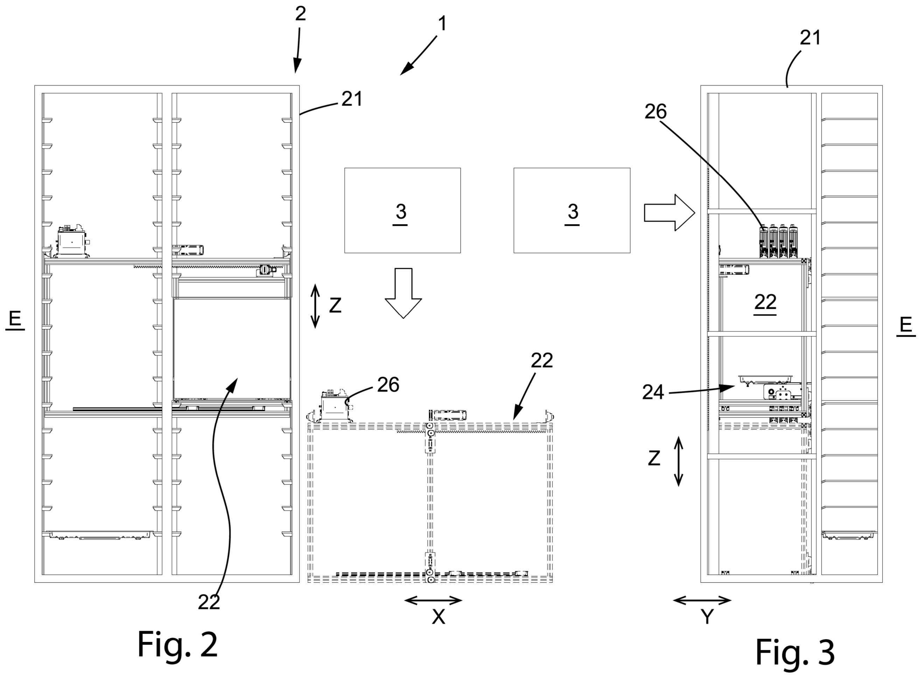

Referring to figures 2 and 3, a front view and a side view of the distribution system 1 can be observed, respectively.

The column 26 is visible at the center of the distribution assembly 2, extending vertically through the structure. This column 26 serves as a guide for vertical movement within system 1.

Figure 3, in particular, presents a side view of the distribution system 1, providing a different perspective on the organization of the components. The support frame 21 is shown housing multiple vertically stacked boxes 22. The column 26 is clearly visible along the right side of the structure, illustrating its role in facilitating vertical movement.

Both figures demonstrate the modular nature of the distribution system 1, with the support frame 21 allowing for flexible configuration of the boxes 22.

As mentioned, the system is designed to enable efficient and automated management of storage spaces. The distribution system 1 is designed to interact directly with the architecture of building E, as the 213 drawers can be aligned with the openings or mouths of building E, facilitating loading and unloading operations directly from inside or outside the building itself. This modular and technological approach offers a versatile distribution system, suitable for various building types and configurations, with the ability to be efficiently controlled remotely via mobile devices.

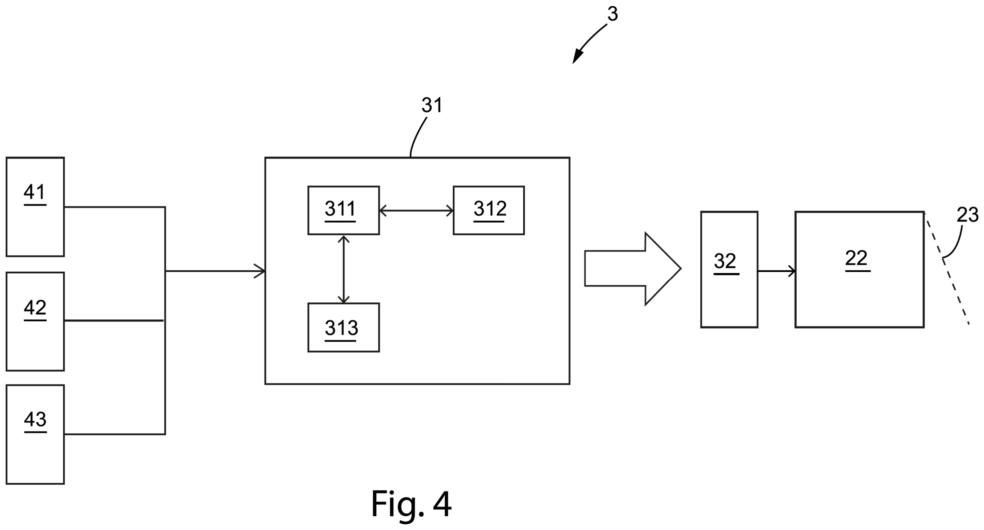

Referring now to figure 4, the distribution system 1 comprises control means 3, which, in the embodiment shown, comprises a central control unit 31. The central control unit 31 may comprise a programmable microprocessor 311 and storage means 312 for storing a program that is executed by the microprocessor 311. This configuration allows the central control unit 31 to manage the operations of the distribution system 1, including the movement of the box 22 and the opening of the door 23.

In some cases, the central control unit 31 may comprise a transceiver means 313, preferably of a cellular and/or Wi-Fi type. These transceiver means 313 allow the central control unit 31 to communicate with a plurality of mobile devices 41, 42, 43, such as cell phones, smartphones, tablets, laptops, and the like, each associated with a user of the storage and distribution system 1 according to the present invention. This communication may allow users to send commands to the distribution system 1 via their mobile devices 41, 42, 43.

In particular, the central control unit 31 can be configured to receive from one of the mobile devices 41, 42, 43 a coded signal for controlling the loading and unloading positions of the box 22 and the opening of the door 23. This coded signal can comprise information on the operations to be performed, such as the desired position of the box 22 or the opening status of the door 23. In response to receiving the coded signal, the central control unit 31 can send commands to the peripheral unit 32 to operate the moving means 24 and control the opening of the door 23. In fact, the box 22 is preferably equipped with a door 23 that can be opened selectively by means of a respective electric actuator.

The box 22 can be moved along the support frame 21 by the elevator 25, controlled by the peripheral unit 32 in response to the commands received from the central control unit 31. In this way, the box 22 can be positioned in various positions within the building E for loading and unloading of parcels, and the door 23 can be opened or closed according to the user's needs.

In some respects, the box 22 can be designed to handle parcels with a 500% dimensional variability. This dimensional flexibility can allow the distribution system 1 to handle a wide range of different-sized parcels, from small parcels to very large parcels. This feature can increase the versatility of the distribution system 1, allowing it to adapt to different storage and distribution needs.

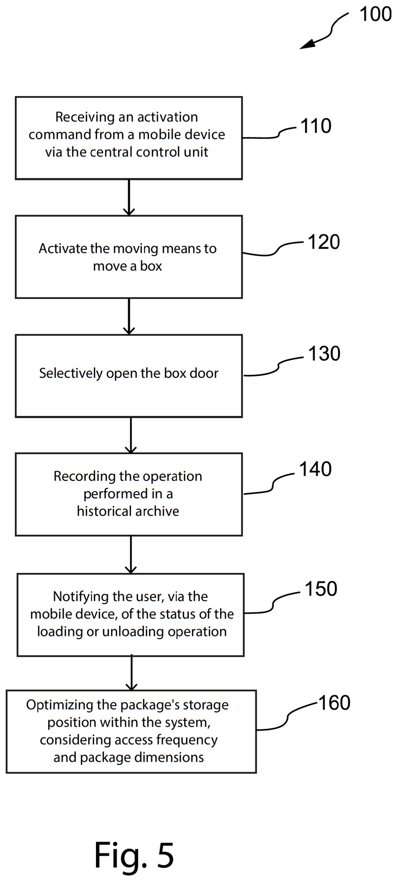

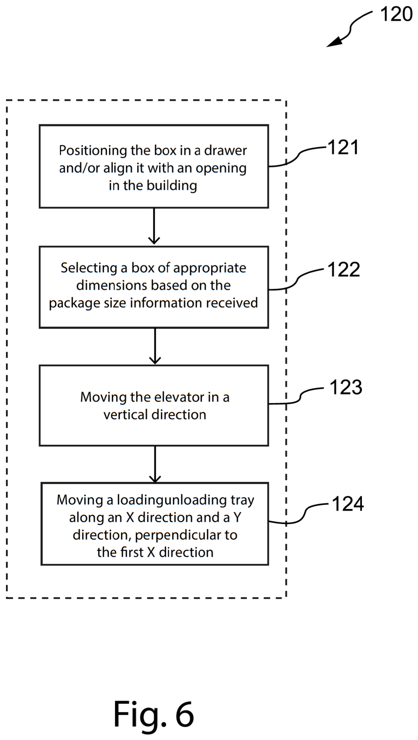

Referring now to figures 5 and 6, a flowchart of the method 100 for managing a dynamic parcel storage and distribution system 1 in buildings E is shown. Said method 100 initially provides the step 110 of receiving an activation command from a mobile device 41, 42, 43 via the central control unit 31. This activation command may be sent by a user wishing to insert or remove a parcel from the box 22. In some cases, the activation command may include information on the size of the parcel to be managed, allowing the system to select a box 22 of appropriate size.

Subsequently, method 100 provides for the step 120 of activating the moving means 24 to move the box 22 in response to the received command. This step may involve moving the box 22 to a predetermined loading or unloading position in the building E. The moving means 24 may be operated by the peripheral unit 32, which receives commands from the central control unit 31.

After having positioned the box 22 in the desired position, the method 100 provides for the step 130 of selectively opening the door 23 of the box 22, to allow the insertion or extraction of a parcel from the box 22 by a user.

In some embodiments, the opening of the door 23 may be controlled by the peripheral unit 32 in response to commands received from the central control unit 31.

Still referring to figures 5 and 6, the method 100 continues with step 140 of recording the performed operation in a historical archive. This step may involve recording details relating to the loading or unloading operation, such as the identity of the user who sent the activation command, the position of box 22 within the support frame 21, the size of the handled package, and so on. This information may be useful for tracking the history of operations performed by the distribution system 1 and for analyzing system performance.

The method 100 also comprises the step 150 of notifying the user, via mobile device 41, 42, 43, of the status of the loading or unloading operation. This notification may inform the user that the parcel has been successfully inserted or removed from box 22, or may provide information on the progress of the operation. In some cases, the notification may be sent via a mobile application or text message to the user's mobile device 41, 42, 43.

Subsequently, the method of operation 100 comprises the step 160 of optimizing the storage position of the parcel within the system 1.

This step may be based on an algorithm that considers various factors, such as the frequency of access to box 22 and the size of the parcel. For example, if the box 22 is frequently accessed, the algorithm may decide to place the box 22 in an easily accessible location within support frame 21. Similarly, if the parcel is particularly large, the algorithm may decide to place box 22 in a location that provides sufficient space for the parcel.

Such optimization can improve the efficiency of the distribution system 1, allowing a more effective use of the available space inside the support frame 21.

In some cases, the storage location optimization can be performed during periods of low system 1 activity. For example, optimization can be performed overnight, when users are less likely to send activation commands. This can allow distribution system 1 to rearrange boxes 22 and their contents within support frame 21 without interrupting loading and unloading operations.

With particular reference to figure 6, the sub-steps of the activation step 120 of the method 100 are observed, which may include the sub-step of positioning 121 of the box 22 in a drawer 213 and/or the alignment of the box 22 with an opening of the building E. This positioning and alignment of the box 22 may facilitate the loading and unloading operations of the packages, allowing direct access to the box 22 from inside or outside the building E.

The activation step 120 may further comprise the sub-step 122 of selecting a box 22 of an appropriate size based on the received package size information. This selection of the box 22 may allow the distribution system 1 to efficiently utilize the available space within the support frame 21 by matching the package size to a box 22 of an appropriate size.

Furthermore, the activation step 120 may comprise the sub-step 123 of movement of the elevator 25 in said vertical direction Z. This movement of the elevator 25 may allow the box 22 to be positioned at different heights within the support frame 21, facilitating the loading and unloading operations of the parcels at various levels of the building E.

Finally, the activation step 120 may comprise the sub-step 124 of moving a loading-unloading tray 261 along the first sliding guide 262 in the first direction X, and along the second sliding guide 263 in the second direction Y, perpendicular to the first sliding guide 262. This movement of the loading-unloading tray 261 may allow a precise positioning of the box 22 within the support frame 21, both in the vertical and horizontal directions.

In some embodiments, the distribution system 1 may include a service for automatically filling specific bottles with filtered or carbonated drinking water. This service may be provided by centralized dispensers, which may be located in specific areas within the building E. This service can provide users with convenient and easy access to drinking water directly within the building, eliminating the need to purchase and transport bottled water.

Furthermore, the distribution system 1 may include a service for the delivery of pre-selected detergents in specific containers to each floor of building E. This service may allow users to receive household cleaning detergents directly inside the building, eliminating the need to purchase and transport heavy detergent containers.

In some respects, distribution system 1 may utilize highly efficient and quiet motors. These motors can allow the distribution system 1 to operate efficiently and quietly, minimizing distractions and disturbances for users within building E.

In some cases, the distribution system 1 may include a feature for recognizing goods entering the delivery or pickup slots, or when such goods are inserted into and removed from the boxes 22. This feature may allow the distribution system 1 to automatically identify parcels being inserted into or removed from the box 22, providing accurate and automated control of the flow of parcels within the system 1.

In some embodiments, the distribution system 1 may include a specialized user interface. This user interface may include a mobile application specifically designed for delivery personnel to access residential building E. This mobile application may allow delivery personnel to easily interact with the distribution system 1, facilitating the loading and unloading of parcels.

In some aspects, the distribution system 1 can be configured to have spaces that can be reserved and rented for a fixed period of time. These spaces can be used by users to store personal belongings, freeing up space within their private residences. Furthermore, these rental spaces can be built with a high degree of theft protection, providing a secure place to store valuables.

In some cases, the distribution system 1 may include a notification system for parcel management. This notification system can notify users when goods have been picked up and are available for pickup. Additionally, the notification system can notify users when the goods they have made available for shipment have been picked up. These notifications can be sent to users via their mobile devices 41, 42, 43, providing real-time updates on the status of their parcels.

The order of the steps in the method 100 described is exemplary, but the steps may be performed in any appropriate order or simultaneously, where appropriate. Furthermore, steps may be added or substituted, or individual steps may be eliminated without changing the scope of the present invention.

In other embodiments, standard lockers are installed within the technical shaft (e.g., elevator shaft or other), with the option of including secure storage areas for valuables or goods requiring a higher level of security. These secure spaces, which can be located in areas such as the basement or attic of the building E, offer additional flexibility and security to users who need to store valuable or sensitive items in a protected environment.

A further aspect of the present invention is the fact that the automated distribution system 1 has the ability to integrate with other services already present or future in the building E in which it is installed. For example, one of the envisaged uses is integration with water purification systems and detergent dispensers that can be placed in the basement. Residents (users) can easily order the filling of water bottles or the dispensing of detergents through the app of the system, and pick up products directly from their floor, without having to go downstairs. This approach not only improves resource efficiency but also offers a convenient and practical service that makes residents' daily lives easier.

From another perspective, the automated distribution system 1 is a multifunctional and versatile solution, capable of meeting the needs of large-scale retail trade (GDO) businesses and residents. The system can be used as a secure collection point for orders placed online, such as groceries or other goods purchased via e-commerce. Thanks to its 24-hour accessibility, residents can pick up their orders at any time, without having to worry about traditional delivery times or a physical presence at home. Furthermore, the system can be adapted to integrate additional services, such as laundry pickup and delivery, which can be managed directly through the system, allowing for continuous and efficient service, even outside of conventional hours.

A particularly advanced technological aspect of the system 1 is the dynamic management of storage spaces. The automated distribution system 1 is equipped with an intelligent software that optimizes the use of space within the compartments. Each locker or box 22 can be configured based on the size of the incoming package: the system can automatically recognize the dimensions of the stored item and adjust the required space, thus reducing waste and maximizing total storage capacity. This dynamic approach ensures that space is used efficiently, especially in urban settings.

Additionally, the system 1 was designed with an intuitive user interface, allowing for quick and easy management for all residents (users). The dedicated mobile app offers real-time notifications, informing the user when a package has been delivered or collected, eliminating the need to manually check the status of deliveries. The system is safe and secure, ensuring that only the designated recipient can access the parcels through secure authentication systems, such as PIN recognition or biometric technologies.

Regarding the implementation of the system 1 in existing or newly constructed E buildings, system 1 is extremely flexible and scalable. It can be installed in a variety of buildings, from residential to commercial, without the need for invasive structural modifications. In contexts where available space is limited, such as densely populated urban buildings, the system represents an optimal solution for providing additional storage space in a safe and accessible manner.

### Advantages

One advantage of this invention is that it optimizes space within buildings. The system effectively utilizes vertical space, maximizing storage capacity without taking up valuable living space.

Another advantage of the present invention is its high flexibility. The modular structure allows for easy customization and adaptation to different building configurations and user needs.

Another advantage of this invention is the improved accessibility. Users can access their parcels at any time, eliminating the need to be present during delivery.

One advantage of this invention is increased security. The system can provide secure storage for parcels, reducing the risk of theft or damage.

An advantage of the present invention is that it enables an intelligent management. The optimization algorithm can enable efficient storage space management, improving overall system utilization.

Another advantage of the present invention is improved traceability. The system can offer real-time tracking of packages, providing users with accurate information on the status of their deliveries.

One advantage of the present invention is that it reduces operating costs. Automating the delivery process can reduce labor costs associated with manual parcel handling.

Another advantage of the present invention is that it improves the user experience. The intuitive user interface and real-time notifications can significantly improve the overall user experience of the system.

A further advantage of the present invention is that it exploits an already existing space, that of the elevator and plant shafts, without requiring invasive structural modifications to the buildings.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. A dynamic parcel conservation and distribution system (1) for buildings (E), comprising:
a distribution assembly (2), comprising
a supporting frame (21), intended to be installed on a building (E),
one or more boxes (22), each one having a selectively openable door (23), and
moving means (24) for moving said box (22) along said supporting frame (21); and
control means (3), comprising
a central control unit (31), and
a peripheral unit (32) operatively connected to said central control unit (31) and to said moving means (24), for moving said boxes (22) to correspond to positions in said building (E) for loading and unloading of said box (22);
wherein said central control unit (3) is configured to control said peripheral unit (32) such that:
- said peripheral unit (32) actuates said moving means (24) to position said box (22) at a loading position of said box (22);
- said peripheral unit (32) actuates the opening of said door (23) for the insertion of at least one item into said box (22);
- said peripheral unit (32) actuates said moving means (24) to position said box (22) at an unloading position in said building (E); and
- said peripheral unit (32) actuates the opening of said door (23) for the removal of the contents.

2. The system (1) according to claim 1, **characterized in that** said supporting frame (21) comprises aluminum elements (211, 212) that are interlockable to form a framework.

3. The system (1) according to any one of the preceding claims, **characterized in that** said central control unit (31) comprises
a programmable microprocessor (311), and
storage means (312) for storing a program executed by said microprocessor (311).

4. The system (1) according to the preceding claim, **characterized**
**in that** said central control unit (31) comprises retransmission means (313), preferably of cellular and/or Wi-Fi type, and
**in that** it comprises a plurality of mobile devices (41, 42, 43), such as mobile phones, smartphones, tablets, laptops, and the like, programmed to connect with said retransmission means (313) of said central control unit (31),
wherein said central control unit (31) is configured to receive from one of said mobile devices (41, 42, 43) a coded signal for controlling the loading and unloading positions of said box (22) and the opening of said door (23) at said loading and unloading positions.

5. The system (1) according to any one of the preceding claims, **characterized in that** said distribution assembly (2) comprises
a column (26), and
an elevator (25), movable in sliding motion on said column (26) along a sliding direction (Z),
wherein said box (22) is arranged on said elevator (25).

6. The system (1) according to any one of the preceding claims, **characterized in that** said supporting frame (21) comprises
one or more vertically arranged and adjacent lanes (214), and
one or more drawers (213), arranged in said lanes (214),
wherein said elevator (25) is capable of positioning said box (22) on one of said drawers (213).

7. System (1) according to the preceding claim, **characterized in that** said elevator (25) comprises:
a loading-unloading tray (261);
a first sliding guide (262), on which said loading-unloading tray (261) is arranged, wherein said loading-unloading tray (261) is movable in a direction (X) for positioning said box (22) in one of said drawers (213), and
a second sliding guide (263) for the movement on which said loading-unloading tray (261) is arranged, wherein said loading-unloading tray (261) is movable in a direction (Y) for positioning said box (22) corresponding to one of said lanes (214).

8. The system (1) according to any one of claims 6 or 7, **characterized in that** said drawers (213) are positioned corresponding to openings or mouths of said building (E).

9. Method (100) for the automated management of a dynamic conservation and distribution system (1) for buildings (E) of parcels according to any one of the preceding claims, comprising the steps of:
receiving (110) an activation command from a mobile device (41, 42, 43) via said central control unit (31);
activating (120) said moving means (24) form moving a box (22) in response to the received command, to move said box (22) towards a predetermined loading or unloading position; and
selectively opening (130) the door (23) of the box (22) to allow the insertion or extraction of a parcel.

10. Method (100) according to the preceding claim, when dependent on any one of claims 6-8, **characterized in that** said activation step (120) comprises the sub-step of positioning (121) the box (22) in a drawer (213) and/or aligning it with an opening of the building (E).

11. Method (100) according to any one of claims 9 or 10, **characterized in that** said activation step (120) comprises the sub-step of:
selecting (122) a box (22) of appropriate dimensions based on information about the size of the parcel received.

12. Method (100) according to any one of claims 9-11, **characterized in that** said request or activation signal comprises information about the size of the parcel to be managed.

13. Method (100) according to any one of claims 9-12, **characterized by** comprising the step of recording (140) the operation performed in a historical archive.

14. Method (100) according to any one of claims 9-13, **characterized by** comprising the step of notifying (150) the user, via the mobile device (41, 42, 43), of the status of the loading or unloading operation.

15. Method (100) according to any one of claims 9-14, **characterized in that** the activation step (120) comprises the following sub-steps:
moving (123) said elevator (25) in a vertical direction (Z); and
moving (124) a loading-unloading tray along a first sliding guide in direction (X) and a second sliding guide in direction (Y), perpendicular to said first sliding guide in direction (X).

16. Method (100) according to any one of claims 9-15, **characterized by** further comprising the steps of:
optimizing (160) the storage position of the parcel within the system (1) based on an algorithm that considers the frequency of access and the sizes of the parcels.

17. Method (100) according to the preceding claim, **characterized in that** said optimization of the storage position is performed during periods of low activity of the system (1).
